# EUROPÄISCHE PATENTSCHRIFT

(11) **EP 2 674 390 B1**
(45) Veröffentlichungstag und Bekanntmachung des Hinweises auf die Patenterteilung: **29.04.2015**
(21) Anmeldenummer: 13160602.2
(22) Anmeldetag: 22.03.2013
(51) Int. Cl.: B67B 3/20, H02K 16/00, H02K 21/14, H02K 21/22

(54) **Verschließer für Behälter**
Closing machine for containers
Machine de fermeture de récipients

(30) Priorität: 13.06.2012 DE 102012209905
(43) Veröffentlichungstag der Anmeldung: 18.12.2013
(73) Patentinhaber: Krones AG, 93073 Neutraubling (DE)
(72) Erfinder: Schönfelder, Markus, 93073 Neutraubling (DE); Pöschl, Stefan, 93073 Neutraubling (DE)
(74) Vertreter: Grünecker Patent- und Rechtsanwälte PartG mbB

(56) Entgegenhaltungen:
- EP-A2- 2 221 272
- WO-A1-2007/028509
- WO-A2-2010/118806
- US-A1- 2010 307 110

## Beschreibung

Die Erfindung betrifft einen Verschließer für Behälter, insbesondere Flaschen, gemäß dem Oberbegriff des Anspruchs 1 bzw. 2 mit einem, in einem Reinraum wirkenden Verschließkopf und mit einem, mindestens einen Rotor und mindestens einen Stator umfassenden Elektromotor. Ein solcher Verschließer ist im Stand der Technik aus der EP 2 221 272 A2 bekannt.

Schraubverschlüsse von Behältern, wie beispielsweise Flaschen, können bekanntermaßen in Rundläufermaschinen mit mehreren umfänglich angeordneten und um eine gemeinsame Achse rotierenden Verschließern verschlossen werden, wobei die Verschlusskappen jeweils in einem Verschließkopf gehalten und diese nach Aufsetzen auf die jeweilige Behältermündung sowohl gedreht als auch der Gewindesteigung entsprechend abgesenkt werden. Alternativ können auch die Behälter während des Aufdrehens der Verschlusskappe entsprechend angehoben werden. Die Drehbewegung des Verschließkopfs erfolgt dabei mittels eines Elektromotors und die Absenkbewegung entweder durch eine Steuerkurve oder einen Linearmotor.

Bei vielen Anwendungen werden die Behälter in der Abfüllanlage und im Verschließer in einem Reinraum geführt, um einerseits Mittel für die Konservierung, Pasteurisierung, etc. einzusparen und andererseits um die Behälter mit besonders keimempfindlichen Produkten befüllen zu können. Ebenso können in einem derartigen Reinraum die Behälter und die darin abgefüllten Produkte vor Leckagen der Antriebselemente geschützt werden. Um die Anzahl der Keime und Verschmutzungen im Reinraum weiter abzusenken, werden dabei möglichst viele Komponenten des Verschließers außerhalb des Reinraums angeordnet.

Hierzu offenbart die EP 2 221 272 A2 eine Vorrichtung zum Verschließen von Behältnissen mit berührungsloser Drehmomenterzeugung. Hierbei wird eine Rundläufermaschine mit mehreren Verschließern offenbart, wobei jeweils das Drehmoment eines Motors, der außerhalb eines Reinraums angeordnet ist, mittels einer Magnetkupplung berührungslos auf einen Verschließkopf innerhalb des Reinraums übertragen wird. Die Hubbewegung der Verschließköpfe wird hier über eine Steuerkurve innerhalb des Reinraums bewirkt.

Analog offenbart die WO 2010/118806 einen Verschließer für Schraubkappen bzw. -verschlüsse, wobei ein Antrieb durch eine Magnetkupplung vom Verschließkopf hermetisch getrennt wird.

Nachteilig dabei ist, dass derartige Magnetkupplungen einen entsprechenden Kostenfaktor darstellen und, dass die Magnetkupplungen zur Übertragung der notwendigen Kräfte entsprechend groß dimensioniert werden müssen und sich so die zu bewegenden Massen nachteilig auf das Antriebssystem auswirken.

Ferner offenbart die US 2010/0307110 A1 einen Verschließer, der durch einen Elektromotor mit zwei übereinander angeordneten Statoren angetrieben wird, wobei der obere Stator die Hub- und der untere Stator die Drehbewegung des Verschließkopfs erzeugt.

Aufgabe der vorliegenden Erfindung ist es, einen Verschließer für Behälter, mit einem in einem Reinraum wirkenden Verschließkopf bereitzustellen, bei dem die bewegten Massen reduziert sind und der weniger kostenaufwändig in der Herstellung ist. Ebenso ist es Aufgabe der vorliegenden Erfindung einen Verschließer für Behälter bereitzustellen, bei dem das Eindringen von Verschmutzungen und/oder Keimen in einen Reinraum vermindert wird.

Die Erfindung löst diese Aufgabe bei einem Verschließer für Behälter mit den Merkmalen der unabhängigen Ansprüche 1 oder 2.

Dadurch, dass der Verschließkopf mit dem Rotor des Elektromotors verbunden ist, können die der Auslegung des Verschließers entsprechenden Kräfte vom Magnetfeld des Stators direkt auf den Rotor wirken und so auf den Verschließkopf übertragen werden. Somit müssen die Kräfte nicht über eine groß dimensionierte, teure Magnetkupplung übertragen werden und die bewegten Massen sind somit vermindert. Gleichzeitig verhindert das zur Reinraumtrennung zwischen dem Stator und dem Rotor ausgebildete Element ein Eindringen von Verschmutzungen und Keimen in den Reinraum. Dabei wirkt das Magnetfeld durch das Element zur Reinraumtrennung hindurch auf den Rotor. Anders ausgedrückt ist der Reinraum durch das zwischen dem Stator und dem Rotor angeordnete Element von der Umgebung hermetisch getrennt und somit ist die Trennung zwischen dem Reinraum und der Umgebung innerhalb des Elektromotors angeordnet. Zusätzlich wird so eine Abdichtung des Reinraums erreicht, wodurch zusätzlich Abdichtungsmittel wie Wellendichtringe oder Siphondichtungen eingespart werden können.

Dadurch, dass bei der ersten erfindungsgemäßen Ausführungsform, gemäß dem Anspruch 1, der Stator zur Erzeugung eines Hub- und eines Drehmagnetfeldes ausgebildet ist, kann auf den Rotor durch das Magnetfeld sowohl eine Drehkraft ausgeübt werden, die zur Drehung des Rotors um eine Achse führt, als auch eine Linearkraft, die zu einer Verschiebung des Rotors längs dieser Achse führt.

Ferner stellt die Erfindung mit dem Anspruch 2 einen Verschließer für Behälter, insbesondere Flaschen bereit, mit einem, in einem Reinraum wirkenden Verschließkopf und mit einem, mindestens einen Rotor, einen ersten Stator und einen zweiten Stator umfassenden Elektromotor, dadurch gekennzeichnet, dass der erste Stator zur Erzeugung eines Hubmagnetfeldes und der zweite Stator zur Erzeugung eines Drehmagnetfeldes ausgebildet sind, wobei der eine der beiden Statoren außerhalb des Rotors und der andere der beiden Statoren innerhalb des Rotors angeordnet ist, und dass der Verschließkopf mit dem Rotor verbunden ist und zwischen dem Rotor und den beiden Statoren ein Element zur Reinraumtrennung ausgebildet ist.

Dadurch lässen sich zusätzlich ein einfacherer Aufbau der Statoren und eine einfachere Steuerung erzielen.

Die Behälter können insbesondere Kunststoffflaschen, Glasflaschen, Dosen und/oder Tuben umfassen. Die Behälter können dabei Getränke, Lebensmittel, Hygieneartikel, Pasten, chemische, biologische und/oder pharmazeutische Produkte enthalten. Besonders geeignet ist der Verschließer für das Verschließen von PET-Flaschen, die einen Halskragen aufweisen, an welchem sie zumindest während des Befüllens und Verschließens unterstützend gehalten werden. Dies ist insbesondere der Fall, wenn mikrobiologisch empfindliche Abfüllprodukte in kaltaseptischen Abfüllanlagen abgefüllt werden. Die Behälter können eine Behältermündung zum Aufschrauben der Verschlusskappe umfassen. Denkbar sind ebenso andere Verschlüsse wie beispielsweise Aufdrückverschlüsse oder Kronkorken.

Die Behälter können im Verschließer in einem Reinraum behandelt werden. Ein Reinraum kann dabei ein keim- oder schmutzpartikelverminderter Bereich sein. Der Reinraum kann einen Überdruck gegenüber der Umgebung aufweisen.

Der Elektromotor kann mit einer Motorsteuerung oder -regelung verbunden sein. Der Elektromotor kann ein bürstenloser Gleichstrom oder ein Drehstrommotor sein. Rotor kann der Anker des Elektromotors und/oder der Läufer eines Linearmotors sein. Der Stator kann eine Anordnung von mehreren Elektromagneten sein, die den Rotor umgeben. Die Elektromagnete können jeweils Spulen sein, die insbesondere um einen ferromagnetischen Kern gewickelt sind. Der Stator kann in Längsrichtung länger ausgebildet sein als der Rotor.

Hubmagnetfeld kann bedeuten, dass das Magnetfeld derart steuerbar ist, dass es sowohl das Heben als auch das Absenken des Rotors bewirkt. Drehmagnetfeld kann bedeuten, dass das Magnetfeld derart steuerbar ist, dass sich der Rotor alternativ in beide Drehrichtungen um die Achse dreht. Ebenso kann gleichzeitig eine Drehbewegung als auch eine Linearbewegung des Rotors um die Achse bewirkt werden.

Bei dem Verschließer für Behälter kann das Element zur Reinraumtrennung aus einem nicht-magnetisierbaren Material sein. Dadurch wird das Magnetfeld des Stators durch das Element zur Reinraumtrennung möglichst wenig beeinflusst. Beispielsweise kann das Element zur Reinraumtrennung aus einem Kunststoff, Titan, Aluminium, austenitischen Stahl oder Faserverbundwerkstoffen bestehen. Das Element zur Reinraumtrennung kann eine zylindrische Form aufweisen. Ebenso kann das Element zur Reinraumtrennung aus mehreren ineinander geschachtelten zylinderförmigen Elementen bestehen, insbesondere, wenn mehrere Statoren und/oder mehrere Rotoren eingesetzt werden.

Bei dem Verschließer für Behälter kann der Rotor gegenüber dem Stator in Bezug auf eine Achse verdrehbar und/oder verschiebbar angeordnet sein. Somit kann der Rotor sowohl eine Linearbewegung als auch eine Rotationsbewegung ausführen. Der Rotor kann mit einem Achselement verbunden sein, das insbesondere mit dem Verschließkopf verbunden ist. Der Rotor und/oder das Achselement können gelagert sein. Damit kann eine präzise Bewegung des Rotors erreicht werden.

Bei dem Verschließer für Behälter kann der Rotor eine Vielzahl von Permanentmagneten aufweisen, insbesondere wobei diese in Umfangrichtung wechselnde Polarität aufweisen. Dadurch bewirkt das Magnetfeld des Stators eine Kraft auf den Rotor.

Bei dem Verschließer für Behälter kann der Rotor eine Vielzahl von Spulenelementen aufweisen, insbesondere wobei die Spulenelemente kurzgeschlossen sind. Hierbei induziert das Magnetfeld des Stators Ströme in den Spulenelementen des Rotors. Die Ströme in den Spulenelmenten erzeugen wiederum ein Magnetfeld des Rotors, das in Kombination mit dem Magnetfeld des Stators eine Kraft auf den Rotor ausübt.

Bei dem Verschließer für Behälter kann der Elektromotor als Servomotor ausgebildet sein. Servomotor kann dabei bedeuten, dass der Elektromotor mit einer Regelung zusammenwirkt, so dass insbesondere die Beschleunigung, die Geschwindigkeit, das Drehmoment und/oder die Position des Rotors geregelt werden kann. Die Regelung kann dabei die Drehung und/oder die Linearbewegung des Rotors regeln. Dadurch kann eine genauere Bewegung des Rotors und damit des Verschließkopfes bewirkt werden.

Bei dem Verschließer für Behälter kann dem Elektromotor mindestens ein Signalgeber zur Winkel- und/oder Positionserfassung des Rotors zugeordnet sein. Dadurch kann die genau Position und Verdrehung des Rotors erfasst werden. Der Signalgeber kann Positions- und/oder Winkelsignale an eine Regelung senden. Der Signalgeber kann ein Inkremental- und/oder Absolutwertgeber sein. Der Signalgeber kann Pulse entsprechend der Positions- und/oder Winkelveränderung des Rotors abgeben. Der Signalgeber kann mit einer magnetischen Abtastung arbeiten.

Bei dem Verschließer für Behälter kann der Signalgeber ein, mit dem Rotor verbundenes Innenteil und ein, mit dem Stator verbundenes Außenteil aufweisen und zwischen dem Innen- und Außenteil ein zweites Element zur Reinraumtrennung angeordnet sein. Das Innenteil kann eine Vielzahl von Magnetabtastelementen umfassen. Das Außenteil kann mindestens ein Sensorelement für Magnetfelder umfassen. Das Sensorelement kann ein Hall-Sensor sein.

Weitere Merkmale und Vorteil der Erfindung werden nachfolgend anhand der in den Figuren dargestellten Ausführungsbeispiele erläutert. Dabei zeigt
- Fig. 1: eine Darstellung eines erfindungsgemäßen Verschließers in einer seitlichen Schnittansicht;
- Fig. 2: eine Darstellung des in Fig. 1 gezeigten, erfindungsgemäßen Verschließers mit einem zusätzlichen Signalgeber zur Positionserfassung des Rotors in einer seitlichen Schnittdarstellung; und
- Fig. 3: eine Darstellung eines erfindungsgemäßen Verschließers mit zwei Statoren in einer seitlichen Schnittansicht.

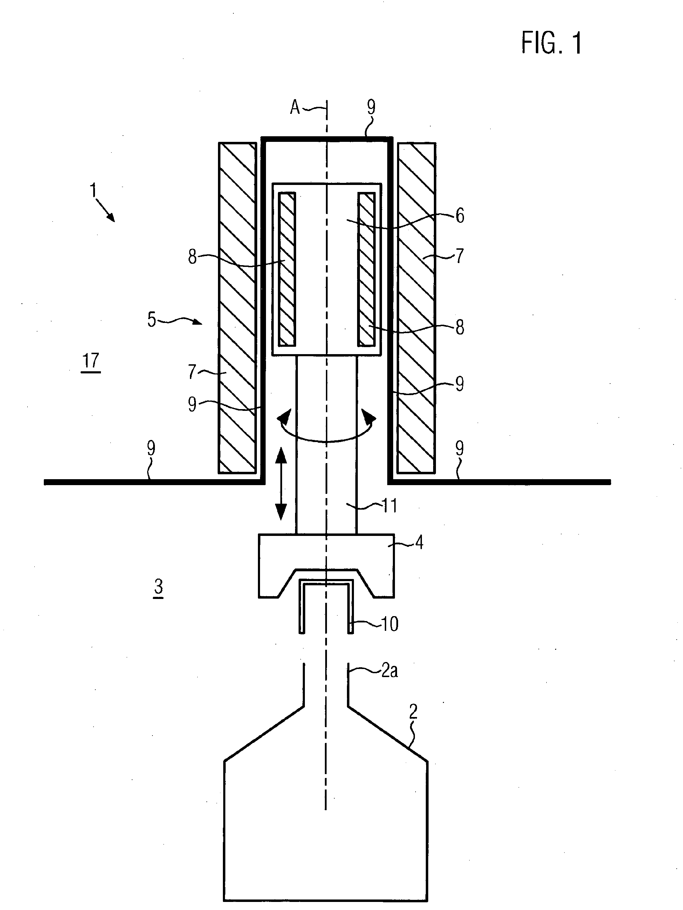

Fig. 1 zeigt eine Darstellung eines erfindungsgemäßen Verschließers 1 in einer seitlichen Schnittansicht. Dabei bewegt ein Elektromotor 5 über ein Achselement 11 den Verschließkopf 4. Der Verschließkopf 4 nimmt zunächst eine Verschlusskappe 10 auf und schraubt diese über eine Absenk-Drehbewegung auf die Behältermündung 2a des Behälters 2. Der hier dargestellte Behälter 2 ist dabei eine Flasche.

Der Elektromotor 5 ist hier als Drehstrommotor ausgeführt und weist einen Stator 7 und einen Rotor 6 auf, zwischen denen ein Element zur Reinraumtrennung 9 ausgebildet ist. Dieses Element zur Reinraumtrennung 9 ist dabei als gehäuseartige Ummantelung aus einem nichtmagnetischen Kunststoff gebildet und weist die Form eines einseitig geschlossenen Zylinders mit Rotationssymmetrie um die Achse A auf. Durch das Element zur Reinraumtrennung 9 wird so der Reinraum 3 von der Umgebung 17 hermetisch abgetrennt. Somit können weder Schmierstoffe von Antriebseinheiten, Schmutzpartikel und/oder Keime von der Umgebung 17 in den Reinraum 3 eindringen. Ebenso kann kein Druck von dem Reinraum 3 an die Umgebung 17 entweichen.

Der Stator 7 ist dabei so ausgebildet, dass er ein Hub- und ein Drehmagnetfeld in Bezug auf die Achse A erzeugt. Dazu weist der Stator 7 eine Vielzahl von Elektromagneten auf, die Magnetfelder mit unterschiedlicher Richtung und Stärke sowohl in Umfangsrichtung, als auch längs der Achse A erzeugen können. Die Magnetfeldverteilung wird über eine Steuerung (hier nicht dargestellt) der Elektromagnete gesteuert. Anders ausgedrückt sind beispielsweise (in einem Schnitt senkrecht zur Achse A) drei Elektromagnete in Umfangsrichtung angeordnet und in einem Schnitt entlang der Achse A neun Elektromagnete in Längsrichtung. Somit weist der Stator 7 in diesem Beispiel insgesamt 3 x 9 = 27 Elektromagnete auf. Somit lässt sich ein Hub- bzw. Drehmagnetfeld erzeugen um die gewünschte Bewegung des Rotors 6 und damit des Verschließkopfs 4 auszuführen.

Der Rotor 6 ist innerhalb des Elements zur Reinraumtrennung 9 angeordnet. Dabei ist der Rotor 6, in diesem Fall zum Schutz vor aggressiven Reinigungsmitteln gekapselt bzw. mit einer fluiddichten Hülle umschweißt, gegenüber dem Stator 7 in Bezug auf die Achse A verdreh- und verschiebbar angeordnet. Damit sich der Rotor 6 immer im Bereich des Magnetfelds des Stators 7 befindet, ist der Stator 7 in Richtung der Achse A länger als der Rotor 6 ausgeführt. Auf dem Rotor 6 befindet sich eine Vielzahl von Permanentmagneten 8. Diese weisen in Umfangsrichtung eine wechselnde Polarität auf. Dadurch lässt sich die Position des Rotors 6 in Bezug auf die Achse A mit dem am Stator 7 angelegten Magnetfeld steuern, wobei so der Verschließkopf 4 die gewünschte Dreh- bzw. Hub- oder Senkbewegung ausübt. Der Rotor 6 ist durch Sicherungseinrichtungen (nicht dargestellte) gegen ein Herabfallen bei Ausfall der Stromversorgung gesichert.

Bei dem in Fig. 1 dargestellten Verschließer ist somit keine zusätzliche Magnetkupplung notwendig, um die Kräfte einer Antriebseinheit auf den Verschließkopf 4 innerhalb des Reinraums 3 auszuüben. Dadurch muss von dem Elektromotor 5 eine geringere träge Masse bewegt werden und der Elektromotor 5 kann entsprechend kleiner dimensioniert werden. Dadurch ergeben sich auch entsprechende Kostenvorteile bei der Herstellung des Verschließers. Durch die hermetische Trennung des Reinraums 3, die zwischen dem Stator 7 und dem Rotor 6 ausgebildet ist, können des Weiteren auch keine Keime oder Verschmutzungen von der Umgebung 17 in den Reinraum 3 eindringen. Eine Kontamination des Produkts im Behälter 2 lässt sich somit während des Verschließens vermeiden.

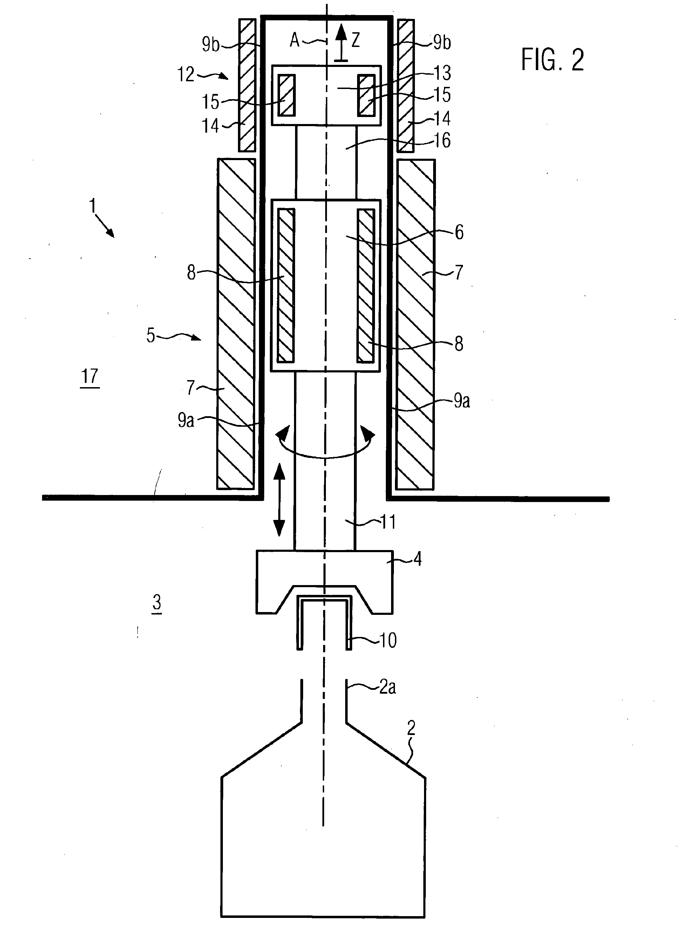

Fig. 2 zeigt eine Darstellung des in Fig. 1 gezeigten, erfindungsgemäßen Verschließers 1 mit einem zusätzlichen Signalgeber 12 zur Positionserfassung des Rotors 6 in einer seitlichen Schnittdarstellung. Dabei ist die Anordnung des Verschließers 1 bis auf den Signalgeber 12 genauso aufgebaut, wie in Fig. 1. Dabei ist der Signalgeber 12 oberhalb des Elektromotors 5 angeordnet.

Der Signalgeber 12 weist ein mit dem Rotor 6 verbundenes Innenteil 13 und ein mit dem Stator 7 verbundenes Außenteil 14 auf, wobei zwischen dem Innenteil 13 und dem Außenteil 14 ein zweites Element zur Reinraumtrennung 9b angeordnet ist, das insbesondere direkt mit einem ersten Element zur Reinraumtrennung 9a zwischen dem Rotor 6 und dem Stator 7 verbunden ist. Anders ausgedrückt sind die beiden Elemente zur Reinraumtrennung 9a und 9b für den Elektromotor 5 und den Signalgeber 12 einteilig aufgebaut. Hierdurch wird auch im Bereich des Signalgebers 12 eine hermetische Trennung des Reinraums 3 von der Umgebung 17 erzielt, wodurch auch hier keine Verschmutzungen und/oder Keime von der Umgebung 17 in den Reinraum 3 eindringen können. Ebenfalls kann kein Druckausgleich zwischen dem Reinraum 3 und der Umgebung 17 erfolgen.

Hierbei befinden sich auf dem Innenteil 13 eine Vielzahl von Magnetabtastelementen 15 mit unterschiedlicher Magnetpolung; dies ist sowohl in Umfangsrichtung als auch in Längsrichtung in Bezug auf die Achse der Fall. Das Außenteil 14 weist dabei eine Vielzahl von Sensorelementen auf, mit denen die genaue Längsposition in Z-Richtung und die genau Winkelposition des Rotors 6 in Bezug auf die Achse A erfasst werden kann. Die Sensorelemente sind hier als Hall-Sensoren ausgebildet und erfassen somit die Position der Magnetabtastelemente 15..

Der Signalgeber 12 gibt dabei ein Signal an eine Regelung ab (hier nicht dargestellt), die hierdurch genau Positionsdaten des Rotors 6 berechnet. Durch einen Regelkreis (beispielsweise mit einem PID-Regler) wird nun das Magnetfeld des Stators 7 so eingestellt, dass die gewünschte Bewegung des Rotors 6 und damit des Verschließkopfs 4 bewirkt wird. Gleichzeitig erhält die Regelung von einer zentralen Steuerung (hier nicht dargestellt) Befehle für die Bahnkurve des Verschließkopfs 4.

Durch die in Fig. 2 gezeigte Anordnung mit Signalgeber lässt sich die Bewegung des Verschließkopfs 4 noch genauer regeln, als in der in Fig. 1 dargestellten Ausführungsform.

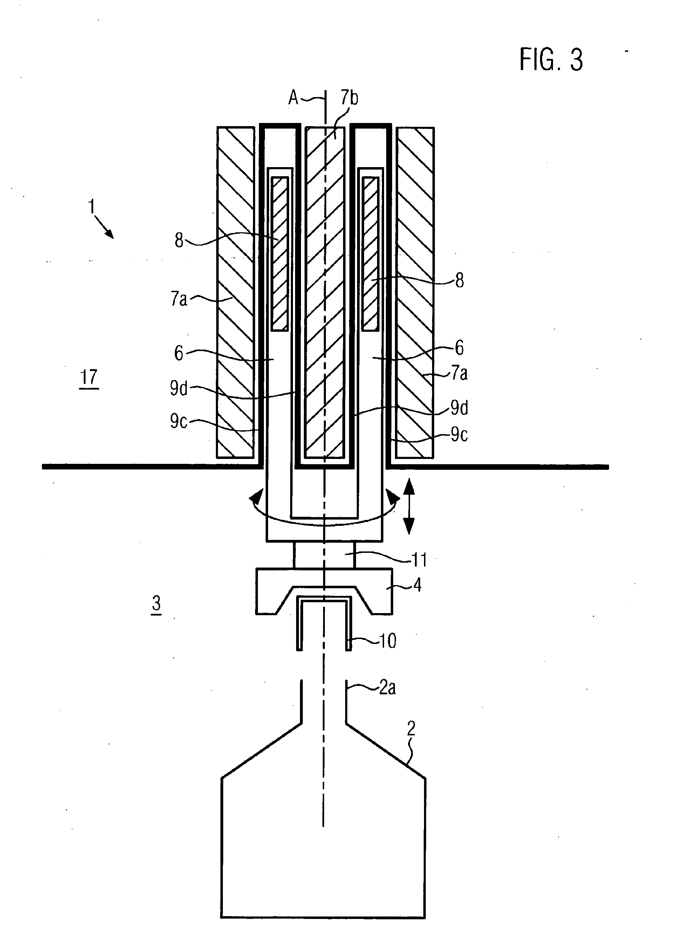

Fig. 3 zeigt eine Darstellung eines erfindungsgemäßen Verschließers 1 mit zwei Statoren 7a, 7b in einer seitlichen Schnittansicht. Hierbei wird das Hubmagnetfeld für den Rotor 6 mit dem ersten Stator 7a erzeugt und das Drehmagnetfeld mit dem zweiten Stator 7b.

Zu sehen ist, dass der Rotor 6 in Fig. 3 eine Hohlzylinderform aufweist, die rotationssymmetrisch um die Achse A ist. Am oberen Ende des Rotors 6 befinden sich die Permanentmagnete 8. Auf die Permanentmagnete 8 kann mittels des Stators 7a eine Kraft ausgeübt werden, so dass sich der Rotors 6 entlang der Achse A auf und ab bewegt. Zusätzlich kann mit dem zweiten Stator 7b eine Kraft auf den Rotor 6 ausgeübt werden, so dass sich der Rotor 6 um die Achse A dreht. Alternativ könnte auch der außen angeordnete, erste Stator 7a das Drehmagnetfeld erzeugen und der innen angeordnete, zweite Stator 7b das Hubmagnetfeld.

Zwischen den beiden Statoren 7a und 7b ist ein Element zur Reinraumtrennung 9c, 9d angeordnet. Dabei befindet sich der Teil 9c zwischen dem ersten Stator 7a und dem Rotor 6 bzw. der Teil 9d zwischen dem zweiten Stator 7b und dem Rotor 6. Die beiden Teile 9c bzw. 9d des Elements zur Reinraumtrennung sind als konzentrische Zylinder ausgebildet, die an der Ober- bzw. Unterseite so miteinander durch ebene Teile verbunden sind, dass sie den Reinraum 3 gegenüber der Umgebung 17 hermetisch trennen. Somit können keine Verschmutzungen und/oder Keime aus der Umgebung 17 in den Reinraum 3 eindringen und es kann auch kein Druck aus dem Reinraum 3 in die Umgebung 17 entweichen.

Durch die in Fig. 3 gezeigte Anordnung lässt sich somit die Bewegung des Verschließkopfs 4 über das Achselement 11 mittels der Bewegung des Rotors 6 so steuern, dass der Verschließkopf 4 die Verschlusskappe 10 auf die Behältermündung 2a mit einer Absenk-Drehbewegung aufschraubt und sich nach Beenden des Verschließvorganges wenigstens durch eine Hubbewegung wieder vollständig von der Verschlusskappe entfernt.

Durch die Anordnung in Fig. 3. lassen sich das Hub- bzw. das Drehmagnetfeld getrennt voneinander ansteuern und somit lässt sich die Steuerung vereinfachen.

In einer weiteren Ausführungsform (nicht gezeigt) wird der einfache Aufbau des Elektromotors 5 aus Fig. 1 zur kombinierten Hub- und Drehbewegung des Verschließkopfs mittels eines Stators und eines Rotors, mit den Elementen zur Reinraumtrennung 9c und 9d aus Fig. 3 kombiniert. Anders gesagt kann in der in Fig. 3 gezeigten Ausführungsform auf den äußeren Stator 7a verzichtet werden, wenn gleichzeitig der zweite Stator 7b das Hub- und das Drehmagnetfeld für die Hub- und Drehbewegung erzeugt. Auch hierbei ist der Rotor 6 als Hohlzylinder ausgeführt und umgibt den Stator 7b. Dadurch können die Vorteile eines kombinierten Hub-Drehantriebes genutzt werden, wobei zusätzlich das Element zur Reinraumtrennung 9c als mechanischer Schutz des Elektromotors dient.

Mehrere, der in den Fig. 1 - 3 dargestellten erfindungsgemäßen Verschließer 1 können in einer Rundläufermaschine angeordnet sein, wobei sie gleichmäßig auf einem Umkreis der Rundläufermaschine verteilt und fluchtend mit auf der Rundläufermaschine angeordneten Behälterbehandlungsplätzen angeordnet sein können, wodurch ein kontinuierlicher Betrieb der Rundläufermaschine möglich ist.

Es versteht sich, dass in den zuvor beschriebenen Ausführungsbeispielen genannte Merkmale nicht auf diese speziellen Kombinationen beschränkt sind und in beliebigen anderen Kombinationen möglich sind, soweit der durch die unabhängigen Ausprüche definierte Schutzumfang nicht verlassen wird.

## Patentansprüche

1. Verschließer (1) für Behälter (2), insbesondere Flaschen, mit einem, in einem Reinraum (3) wirkenden Verschließkopf (4) und mit einem, mindestens einen Rotor (6) und einen Stator (7) umfassenden Elektromotor (5),
wobei der Verschließkopf (4) mit dem Rotor (6) verbunden ist und zwischen dem Rotor (6) und dem Stator (7) ein Element zur Reinraumtrennung (9, 9a, 9c, 9d) ausgebildet ist,
**dadurch gekennzeichnet, dass**
der Stator (7) zur Erzeugung eines Hub- und eines Drehmagnetfeldes ausgebildet ist.

2. Verschließer (1) für Behälter (2), insbesondere Flaschen, mit einem, in einem Reinraum (3) wirkenden Verschließkopf (4) und mit einem, mindestens einen Rotor (6) und einen ersten Stator (7a) umfassenden Elektromotor (5), und
wobei der Verschließkopf (4) mit dem Rotor (6) verbunden ist,
**dadurch gekennzeichnet, dass**
der Elektromotor einen zweiten Stator (7b) umfasst, wobei
der erste Stator (7a) zur Erzeugung eines Hubmagnetfeldes und der zweite Stator (7b) zur Erzeugung eines Drehmagnetfeldes ausgebildet sind, wobei der eine der beiden Statoren (7a) außerhalb des Rotors (6) und der andere der beiden Statoren (7b) innerhalb des Rotors (6) angeordnet ist, und
dass zwischen dem Rotor (6) und den beiden Statoren (7a, 7b) ein Element zur Reinraumtrennung (9, 9a, 9c, 9d) ausgebildet ist.

3. Verschließer (1) für Behälter (2) nach Anspruch 1 oder 2, wobei das Element zur Reinraumtrennung (9, 9a, 9c, 9d) aus einem nicht-magnetisierbaren Material ist.

4. Verschließer (1) für Behälter (2) nach wenigstens einem der Ansprüche 1 - 3, wobei der Rotor (6) gegenüber dem Stator (7) bzw. den Statoren (7a, 7b) in Bezug auf eine Achse (A) verdrehbar und verschiebbar angeordnet ist.

5. Verschließer (1) für Behälter (2) nach wenigstens einem der Ansprüche 1 - 4, wobei der Rotor (6) eine Vielzahl von Permanentmagneten (8) aufweist, insbesondere wobei diese eine in Umfangrichtung wechselnde Polarität aufweisen.

6. Verschließer (1) für Behälter (2) nach wenigstens einem der Ansprüche 1 - 4, wobei der Rotor (6) eine Vielzahl von Spulenelementen aufweist, insbesondere wobei die Spulenelemente kurzgeschlossen sind.

7. Verschließer (1) für Behälter (2) nach wenigstens einem der Ansprüche 1 - 6, wobei der Elektromotor (5) als Servomotor ausgebildet ist.

8. Verschließer (1) für Behälter (2) nach wenigstens einem der Ansprüche 1 oder 3-7, wenn sie von dem Anspruch 1 abhängen, wobei dem Elektromotor (5) mindestens ein Signalgeber (12) zur Winkel- und/oder Positionserfassung des Rotors (6) zugeordnet ist.

9. Verschließer (1) für Behälter (2) nach Anspruch 8, wobei der Signalgeber (12) ein, mit dem Rotor (6) verbundenes Innenteil (13) und ein, mit dem Stator (7) verbundenes Außenteil (14) aufweist und zwischen dem Innen- und dem Außenteil (13,14) ein zweites Element zur Reinraumtrennung (9b) angeordnet ist.

## Claims

1. Closer (1) for containers (2), in particular bottles, with a closing head (4) acting in a clean room (3) and with an electric motor (5) comprising at least one rotor (6) and a stator (7),
wherein the closing head (4) is connected to the rotor (6), and an element for clean room separation (9, 9a, 9c, 9d) is formed between the rotor (6) and the stator (7)
**characterized in that**
the stator (7) is formed for generating a lifting and a rotary magnetic field.

2. Closer (1) for containers (2), in particular bottles, with a closing head (4) acting in a clean room (3) and with an electric motor (5) comprising at least one rotor (6) and a first stator (7a),
wherein the closing head (4) is connected to the rotor (6),
**characterized in that**
the electric motor (5) comprises a second stator (7b),
wherein the first stator (7a) for generating a lifting magnetic field, and a second stator (7b) for generating a rotary magnetic field are formed, wherein one of both stators (7a) is disposed outside the rotor (6), and the other one of both stators (7b) is disposed inside the rotor (6),
wherein an element for clean room separation (9, 9a, 9c, 9d) is formed between the rotor (6) and the stator (7).

3. Closer (1) for containers (2) according to at least one of claims 1 or 2, wherein the element for clean room separation (9, 9a, 9c, 9d) is made of a non-magnetizing material.

4. Closer (1) for containers (2) according to at least one of claims 1 - 3, wherein the rotor (6) is arranged to be rotatable and shiftable with respect to an axis (A) in relation to the stator (7), or the stators (7a, 7b), respectively.

5. Closer (1) for containers (2) according to at least one of claims 1 - 4, wherein the rotor (6) comprises a plurality of permanent magnets (8), the latter in particular having polarities that change in the circumferential direction.

6. Closer (1) for containers (2) according to at least one of claims 1 - 4, wherein the rotor (6) comprises a plurality of coil elements, the coil elements in particular being shortcircuited.

7. Closer (1) for containers (2) according to at least one of claims 1 - 6, wherein the electric motor (5) is formed as a servomotor.

8. Closer (1) for containers (2) according to at least one of claims 1 or 3 - 7, if being dependent on claim 1, wherein at least one sensor (12) for the angle and/or position detection of the rotor (6) is associated with the electric motor (5).

9. Closer (1) for containers (2) according to claim 8, wherein the sensor (12) comprises an inner part (13) connected with the rotor (6) and an outer part (14) connected with the stator (7), and a second element for clean room separation (9b) is arranged between the inner and the outer parts (13, 14).

## Revendications

1. Dispositif de fermeture (1) pour récipients ou contenants (2), notamment des bouteilles, comprenant une tête de fermeture (4) agissant dans une chambre stérile (3) ou en conditions de salle blanche, et comprenant un moteur électrique (5) comportant au moins un rotor (6) et un stator (7), dispositif
dans lequel la tête de fermeture (4) est reliée au rotor (6), et dans lequel entre le rotor (6) et le stator (7) est formé un élément d'isolement de chambre stérile (9, 9a, 9c, 9d),
**caractérisé**
**en ce que** le stator (7) est configuré pour produire un champ magnétique de translation et de rotation.

2. Dispositif de fermeture (1) pour récipients ou contenants (2), notamment des bouteilles, comprenant une tête de fermeture (4) agissant dans une chambre stérile (3) ou en conditions de salle blanche, et comprenant un moteur électrique (5) comportant au moins un rotor (6) et un premier stator (7a), dispositif
dans lequel la tête de fermeture (4) est reliée au rotor (6),
**caractérisé**
**en ce que** le moteur électrique comporte un deuxième stator (7b), le premier stator (7a) étant conçu pour produire un champ magnétique de translation et le deuxième stator (7b) pour produire un champ magnétique de rotation, l'un (7a) des deux stators étant agencé à l'extérieur du rotor (6) et l'autre (7b) des deux stators à l'intérieur du rotor (6), et
**en ce qu'**entre le rotor (6) et les deux stators (7a, 7b) est formé un élément d'isolement de chambre stérile (9, 9a, 9c, 9d).

3. Dispositif de fermeture (1) pour récipients ou contenants (2) selon la revendication 1 ou la revendication 2, dans lequel l'élément d'isolement de chambre stérile (9, 9a, 9c, 9d) est en un matériau non magnétisable.

4. Dispositif de fermeture (1) pour récipients ou contenants (2) selon l'une au moins des revendications 1 à 3, dans lequel le rotor (6) est agencé de manière à pouvoir tourner relativement à un axe (A) et coulisser, par rapport au stator (7) ou aux stators (7a, 7b).

5. Dispositif de fermeture (1) pour récipients ou contenants (2) selon l'une au moins des revendications 1 à 4, dans lequel le rotor (6) comporte un grand nombre d'aimants permanents (8), ceux-ci présentant notamment une polarité qui alterne en direction périphérique.

6. Dispositif de fermeture (1) pour récipients ou contenants (2) selon l'une au moins des revendications 1 à 4, dans lequel le rotor (6) comporte un grand nombre d'éléments de bobine, lesdits éléments de bobine étant notamment court-circuités.

7. Dispositif de fermeture (1) pour récipients ou contenants (2) selon l'une au moins des revendications 1 à 6, dans lequel le moteur électrique (5) est réalisé en tant que servomoteur.

8. Dispositif de fermeture (1) pour récipients ou contenants (2) selon l'une au moins des revendications 1 ou 3 à 7 lorsqu'elles sont rattachées à la revendication 1, dans lequel, au moteur électrique (5) est associé au moins un capteur de fourniture de signal (12) destiné à relever un angle de rotation et/ou une position du rotor (6) .

9. Dispositif de fermeture (1) pour récipients ou contenants (2) selon la revendication 8, dans lequel le capteur de fourniture de signal (12) comprend une partie intérieure (13) reliée au rotor (6), et une partie extérieure (14) relié au stator (7), et entre la partie intérieure et la partie extérieure (13, 14) est agencé un élément d'isolement de chambre stérile (9b).
